# EUROPEAN PATENT APPLICATION

(11) **EP 3 792 719 A1**
(43) Date of publication of application: **17.03.2021**
(21) Application number: 20786434.9
(22) Date of filing: 03.03.2020
(51) Int. Cl.: G05B 23/02

(54) **DEDUCTION SYSTEM, DEDUCTION DEVICE, DEDUCTION METHOD, AND COMPUTER PROGRAM**

(30) Priority: 26.04.2019 JP 2019086586
(71) Applicant: Otsl Inc., Nagoya-shi, Aichi 461-0001 (JP)
(72) Inventor: HATANO, Shoji, Nagoya-shi, Aichi 4610001 (JP); YANAGI, Takahiro, Nagoya-shi, Aichi 4610001 (JP); ASAI, Tatsuo, Nagoya-shi, Aichi 4610001 (JP)
(74) Representative: CMS Cameron McKenna Nabarro Olswang LLP
(86) International application number: PCT/JP2020/008868
(87) International publication number: WO 2020/217714

(57) **Abstract**

An estimation system includes an estimator estimating a state of a controlled object on the basis of a plurality of pieces of sensor information representing a state in a periphery of sensors, detected by a plurality of the sensors, and a model regarding the controlled object controlled by the estimation system, and a controller generating a control command for operating the controlled object such that the controlled object acts toward a predefined control target on the basis of the estimated result.

## Description

### [Technical Field]

The present invention relates to an estimation system, an estimation apparatus, an estimation method, and a computer program.

Priority is claimed on Japanese Patent Application No. 2019-086586, filed April 26, 2019, the content of which is incorporated herein by reference.

### [Background Art]

In recent years, various methods have been examined for the purpose of controlling controlled objects such as vehicles, robots, sprayers, or air conditioners. For example, in a case of air conditioners, Patent Document 1 discloses a technique in which biological information measurement means measures biological information such as a body temperature or motion of the body, and controls an air conditioner on the basis of the measured biological information. As mentioned above, a technique for controlling a controlled object on the basis of acquired information has been examined. However, the technique disclosed in Patent Document 1 has a problem that, in a case where many people are in the same space, air conditioning cannot be controlled with high accuracy suitable for each person. Such a problem is not limited to air conditioners, and may also occur in various controlled objects. Therefore, there is the need for a technique capable of controlling a controlled object with higher accuracy.

### [Citation List]

### [Patent Literature]

[Patent Document 1] Japanese Patent No. 5846015

### [Summary of Invention]

### [Technical Problem]

In light of the above circumstances, an object of the present invention is to provide a technique for controlling a controlled object with higher accuracy.

### [Solution to Problem]

According to an aspect of the present invention, there is provided an estimation system including an estimator estimating a state of a controlled object on the basis of a plurality of pieces of sensor information representing a state in a periphery of sensors, detected by a plurality of the sensors, and a model regarding the controlled object controlled by the estimation system; and a controller generating a control command for operating the controlled object such that the controlled object acts toward a predefined control target on the basis of the estimated result.

According to the aspect of the present invention, in the estimation system, the controlled object is a moving object, the model is a map model representing a location to which the moving object moves, the sensor information includes distance information regarding a distance between an object present in a periphery of the moving object and the moving object, the estimation system further includes a relative position generator generating relative position information representing a relative position between the moving object and the object, and a position information acquirer acquiring position information representing a position of the moving object, the estimator is configured to estimate a position of the moving object on the basis of the position information, the map model, and the relative position information, and the controller is configured to control movement of the moving object.

According to the aspect of the present invention, in the estimation system, the estimator is configured to generate candidate position information representing candidates for a position of the moving object, obtained by performing a predetermined process on the position information and the map model, and estimate a position satisfying a predetermined condition related to a coincidence between the candidate position information and the relative position information to be the position of the moving object.

According to the aspect of the present invention, in the estimation system, the estimator is configured to generate a plurality of pieces of corrected position information in which a position represented by the position information is corrected on the basis of a difference between a position of the object in the map model in which the position information is set to a reference position and a position of the object in the relative position information, and estimate a position represented by corrected position information having a highest coincidence with the relative position information to be the position of the moving object among the plurality of pieces of corrected position information.

According to the aspect of the present invention, the estimation system further includes a fusion sensor information generator generating fusion sensor information by performing sensor fusion on the plurality of pieces of sensor information; and a prediction model generator generating a prediction model for estimating a state of a controlled object on the basis of the fusion sensor information and the model, and the estimator is configured to estimate a state of the controlled object on the basis of the prediction model.

According to another aspect of the present invention, there is provided an estimation apparatus including an estimator estimating a state of a controlled object on the basis of a plurality of pieces of sensor information representing a state in a periphery of sensors, detected by a plurality of the sensors, and a model regarding the controlled object controlled by a estimation system; and a controller generating a control command for operating the controlled object such that the controlled object acts toward a predefined control target on the basis of the estimated result.

According to still another aspect of the present invention, there is provided an estimation method including an estimation step of causing an estimation apparatus to estimate a state of a controlled object on the basis of a plurality of pieces of sensor information representing a state in a periphery of sensors, detected by a plurality of the sensors, and a model regarding the controlled object controlled by a estimation system; and a control step of causing the estimation apparatus to generate a control command for operating the controlled object such that the controlled object acts toward a predefined control target on the basis of the estimated result.

According to still another aspect of the present invention, there is provided a computer program causing a computer to function as the estimation system.

### [Advantageous Effects of Invention]

According to the present invention, it is possible to estimate a position of a moving object with higher accuracy.

### [Brief Description of Drawings]

Fig. 1 is a functional block diagram illustrating a functional configuration of an estimation system 1 of a first embodiment.
Fig. 2 is a functional block diagram illustrating a functional configuration of an information processing apparatus 100 of the first embodiment.
Fig. 3 is a functional block diagram illustrating a functional configuration of an estimation apparatus 200 of the first embodiment.
Fig. 4 is a functional block diagram illustrating a functional configuration of a model storage apparatus 300 of the first embodiment.
Fig. 5 is a functional block diagram illustrating a functional configuration of a control apparatus 400 of the first embodiment.
Fig. 6 is a sequence chart illustrating a flow of a process of executing control commands according to the first embodiment.
Fig. 7 is a functional block diagram illustrating a functional configuration of an estimation system 2 of a second embodiment.
Fig. 8 is a functional block diagram illustrating a functional configuration of a vehicle 600 of the second embodiment.
Fig. 9 is a functional block diagram illustrating a functional configuration of an estimation apparatus 200a of the second embodiment.
Fig. 10 is a functional block diagram illustrating a functional configuration of a model storage apparatus 300a of the second embodiment.
Fig. 11 is a diagram illustrating one specific example of each of relative position information and absolute position information of the second embodiment.
Fig. 12 is a sequence chart illustrating a flow of a first method of estimating a position of a vehicle 600 of the second embodiment.
Fig. 13 is a sequence chart illustrating a flow of a second method of estimating a position of the vehicle 600 of the second embodiment.

### [Description of Embodiments]

### (First Embodiment)

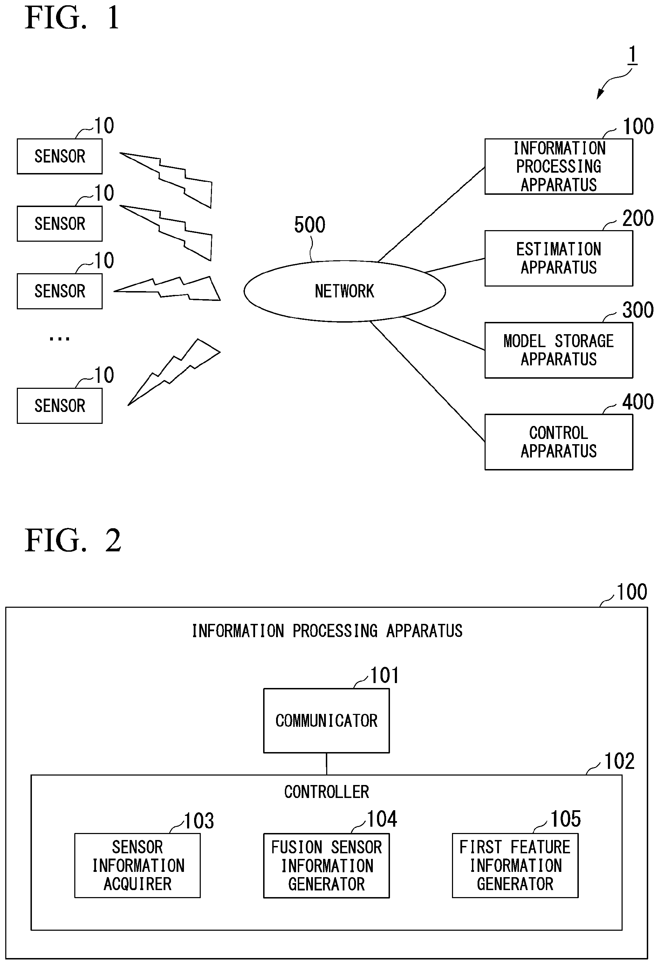

Fig. 1 is a functional block diagram illustrating a functional configuration of an estimation system 1 (host system) of a first embodiment. The estimation system 1 includes a plurality of sensors 10, an information processing apparatus 100, an estimation apparatus 200, a model storage apparatus 300, and a control apparatus 400. The estimation system 1 estimates a state of a controlled object on the basis of information collected from the plurality of sensors 10. The state of a controlled object may be, for example, a position of a vehicle in which the sensors 10 are provided, may be a behavior of a living thing, and may be a state of the atmosphere or the climate. The plurality of sensors 10, the information processing apparatus 100, the estimation apparatus 200, the model storage apparatus 300, and the control apparatus 400 can perform communication with each other via a network 500. The estimation system 1 generates first feature information from the information acquired from the sensors 10. The estimation system 1 generates a prediction model for a controlled object generated by performing predetermined simulation on the information acquired from the sensors 10. The estimation system 1 generates second feature information on the basis of the prediction model. The estimation system 1 estimates a state of the controlled object on the basis of the first feature information and the second feature information. The estimation system 1 controls the controlled object on the basis of an estimated result. Hereinafter, a description will be made of a specific operation of the estimation system 1 of the first embodiment.

The sensor 10 is, for example, a millimeter wave radar, a laser light radar (light detection laser imaging detection and ranging (LIDAR)), an infrared sensor, a radiation sensor, an ultrasonic sensor, a temperature sensor, a humidity sensor, an atmospheric pressure sensor, a pressure sensor, a particle sensor, an acceleration sensor, an angular velocity sensor, or a motion sensor. The sensor 10 detects an object present in the periphery of the sensor 10, such as a road, a peripheral structure, a pedestrian, an animal, a fallen object, or another vehicle. The sensor detects a state in the periphery of the sensor 10, such as a temperature, humidity, raindrop, illuminance, dust, or PM2.5. The sensor 10 generates sensor information on the basis of the detected information. The sensor information represents a state in the periphery of the sensor. The sensor information includes measured values that are measured by the sensors 10, such as a transmittance of an object, a reflectance of an object, a distance between the sensor 10 and an object, and information regarding an environment. The plurality of sensors 10 may generate different pieces of sensor information. The plurality of sensors 10 transmit the generated sensor information to the information processing apparatus 100. The sensor 10 may be an imaging apparatus such as a visible light camera, an ultraviolet camera, an infrared camera, or an X-ray camera. In this case, the sensor information may include a visible image captured by the imaging apparatus and information regarding the image such as a luminance value included in the visible image. The visible image may be a two-dimensional image, and may be a three-dimensional stereoscopic image.

The network 500 is a wide-area communication network such as the Internet. The network 500 may be a network using wireless communication, and may be a network using wired communication. The network 500 may have a configuration in which a plurality of networks are combined with each other. The network 500 is only a specific example of a network for realizing communication of the plurality of sensors 10, the information processing apparatus 100, the estimation apparatus 200, the model storage apparatus 300, and the control apparatus 400, and may employ other configurations as a network for realizing communication of the plurality of sensors 10, the information processing apparatus 100, the estimation apparatus 200, the model storage apparatus 300, and the control apparatus 400.

Fig. 2 is a functional block diagram illustrating a functional configuration of the information processing apparatus 100 of the first embodiment. The information processing apparatus 100 is an information processing apparatus such as a personal computer or a server.

The information processing apparatus 100 generates fusion sensor information on the basis of the information acquired from the plurality of sensors 10. The fusion sensor information is information obtained by combining two or more of pieces of information acquired from the plurality of sensors 10 with each other. The fusion sensor information may be generated, for example, by using sensor fusion for two or more pieces of sensor information. For example, in a case where two or more visible images are included in the information obtained from the plurality of sensors 10, the fusion sensor information may be a stereoscopic image obtained by combining the visible images with each other. In a case where a visible image and an ultraviolet image are included in the information obtained from the plurality of sensors 10, the fusion sensor information may be a visible image in which the luminance of an ultraviolet rays is visualized. The fusion sensor information may be any information as long as the information is obtained by combining two or more pieces of information acquired from the plurality of sensors 10 with each other. For example, in a case where a visible image and an ultraviolet image are included in the information obtained from the plurality of sensors 10, the fusion sensor information may be a visible image in which the luminance of an ultraviolet rays or a trajectory of the ultraviolet rays is visualized. The fusion sensor information may be any information as long as the information is obtained by combining two or more pieces of information acquired from the plurality of sensors 10 with each other. The information processing apparatus 100 generates the first feature information on the basis of the fusion sensor information. The first feature information is feature information extracted from the fusion sensor information. The first feature information may be any information as long as the information is acquired from the fusion sensor information. For example, in a case where the fusion sensor information is information representing a stereoscopic image, the first feature information may be coordinates representing a stereoscopic image, a value stored in each coordinate, or a color of the stereoscopic image. For example, in a case where the fusion sensor information is a visible image obtained by combining a visible image with an ultraviolet image, the first feature information may be a luminance value representing an ultraviolet rays or a trajectory of the ultraviolet rays in the visible image.

The information processing apparatus 100 includes a CPU, a memory, an auxiliary storage device, and the like connected to each other via a bus, and functions as an apparatus including a communicator 101 and a controller 102 by executing a program. The program may be recorded on a non-transitory computer readable recording medium.

The communicator 101 is a network interface. The communicator 101 performs communication with the plurality of sensors 10 and the estimation apparatus 200 via the network 500. The communicator 101 may perform communication according to a wireless communication method such as a wireless local area network (LAN) or Long Term Evolution (LTE) (registered trademark).

The controller 102 controls an operation of each constituent of the information processing apparatus 100. The controller 102 is executed by an apparatus including, for example, a processor such as a central processing unit (CPU) and a random access memory (RAM). The controller 102 functions as a sensor information acquirer 103, a fusion sensor information generator 104, and a first feature information generator 105 by executing a sensor fusion program.

The sensor information acquirer 103 acquires sensor information from the plurality of sensors 10 via the communicator 101. The fusion sensor information generator 104 generates fusion sensor information. The fusion sensor information generator 104 generates the fusion sensor information by executing an algorithm for combining pieces of sensor information with each other, such as the sensor fusion. The fusion sensor information generator 104 may generate a plurality of pieces of fusion sensor information by changing combinations of the acquired sensor information. For example, the sensor information acquirer 103 may generate predetermined fusion sensor information according to a controlled object of the control apparatus 400. The fusion sensor information generator 104 transmits the fusion sensor information to the estimation apparatus 200 via the communicator 101.

The first feature information generator 105 generates the first feature information on the basis of the fusion sensor information. For example, in a case where the fusion sensor information is information representing a stereoscopic image, the first feature information generator 105 generates the first feature information including coordinates representing the stereoscopic image, a value stored in each coordinate, or a color of the stereoscopic image. For example, in a case where the fusion sensor information is a visible image obtained by combining a visible image and a trajectory of an ultraviolet rays, the first feature information generator 105 may generate the first feature information in which a luminance value representing the ultraviolet rays is added to a luminance value of the visible image. The first feature information generator 105 may generate a plurality of different pieces of first feature information on the basis of a single piece of fusion sensor information. The first feature information generator 105 transmits the generated first feature information to the estimation apparatus 200. The first feature information generator 105 may generate the first feature information on the basis of a learning model that is obtained by learning sensor information through deep learning or the like.

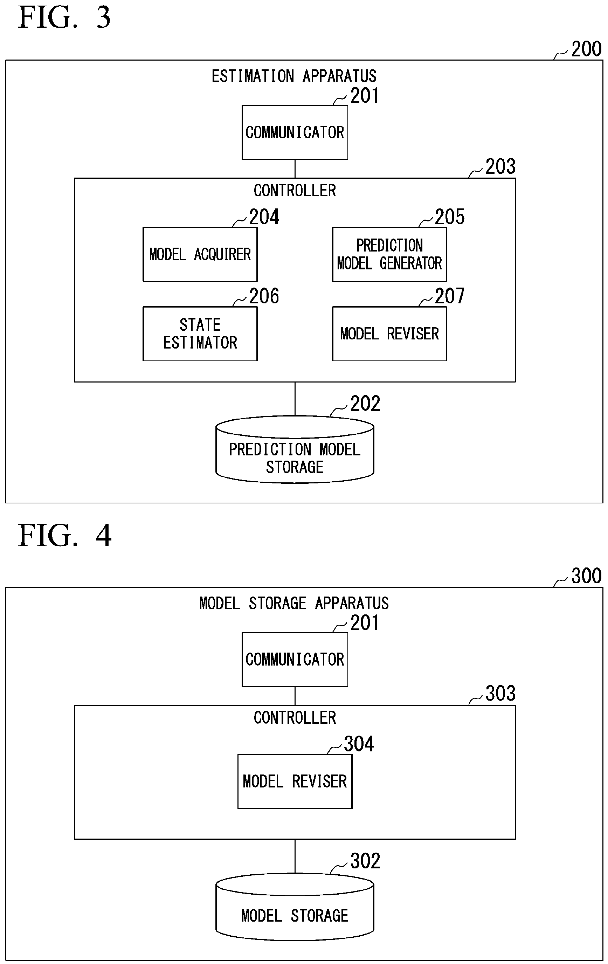

Fig. 3 is a functional block diagram illustrating a functional configuration of an estimation apparatus 200 of the first embodiment. The estimation apparatus 200 is an information processing apparatus such as a personal computer or a server. The estimation apparatus 200 estimates a state of a controlled object on the basis of the fusion sensor information and the first feature information acquired from the information processing apparatus 100 and second feature information generated by the estimation apparatus 200. The estimation apparatus 200 includes a CPU, a memory, an auxiliary storage device, and the like connected to each other via a bus, and functions as an apparatus including a communicator 201, a prediction model storage 202, and a controller 203 by executing an estimation program. The estimation program may be recorded on a computer readable recording medium. The estimation program may be transmitted via an electrical communication line.

The communicator 201 is a network interface. The communicator 201 performs communication with the information processing apparatus 100 via the network 500. The communicator 201 may perform communication according to a communication method such as a wireless LAN, a wired LAN, or LTE.

The prediction model storage 202 is configured by using a storage device such as a magnetic hard disk device or a semiconductor storage device. The prediction model storage 202 stores a prediction model. The prediction model is a model used to simulate a controlled object. The prediction model is generated on the basis of a model and fusion sensor information. The prediction model is a mode used to estimate a state of a controlled object. As the prediction model, any model may be generated according to a model and fusion sensor information. For example, the prediction model may be a model representing a change in an amount of ultraviolet rays from the sun, may be a model representing a position of a moving object, may be a model representing a movement route of a living thing, and may be a model representing a state of the atmosphere.

The controller 203 controls an operation of each constituent of the estimation apparatus 200. The controller 203 is executed by an apparatus including, for example, a processor such as a CPU, and a RAM. The controller 203 functions as a model acquirer 204, a prediction model generator 205, a state estimator 206, and a model reviser 207 by executing the estimation program.

The model acquirer 204 transmits a model request to the model storage apparatus 300. The model request is a process of requesting transmission of a model stored in the model storage apparatus 300. A model is acquired via the communicator 201. The prediction model generator 205 generates a prediction model for simulation on the basis of a model and fusion sensor information. For example, the prediction model generator 205 may generate the prediction model for simulation by recording information included in the fusion sensor information in the model. The prediction model generator 205 may generate the prediction model by executing a predetermined algorithm on the model and the fusion sensor information. The predetermined algorithm may be, for example, an algorithm used to generate a prediction model that can be analyzed by a solver for analyzing a generated prediction model. The prediction model generator 205 records the generated prediction model in the prediction model storage 202.

The state estimator 206 estimates a state of a controlled object by performing predetermined simulation. Specifically, the state estimator 206 generates second feature information on the basis of the prediction model. The second feature information is feature information extracted from the prediction model. The second feature information is information that is comparable with the first feature information among pieces of information acquired from the prediction model. For example, in a case where the first feature information is a luminance value or a color of a stereoscopic image stored in each sets of coordinates representing a stereoscopic image, the second feature information is a luminance value a color of a stereoscopic image stored in each set of coordinates representing the stereoscopic image, or the like. In a case where the first feature information is a luminance value representing ultraviolet rays in a visible image or a trajectory of the ultraviolet rays, the second feature information is a luminance value representing ultraviolet rays in the visible image or a trajectory of the ultraviolet rays. In a case where the first feature information is a temperature or humidity, the second feature information is a temperature or humidity.

Next, the state estimator 206 estimates a state of a controlled object on the basis of the first feature information and the second feature information. The state estimator 206 may calculate a difference between the first feature information and the second feature information. For example, the state estimator 206 may estimate a state of the controlled object according to the difference between the first feature information and the second feature information. In a case where the calculated difference is more than a predefined threshold value, it may be estimated that a state of the controlled object predicted by using the prediction model is greatly deviated from an actual state of the controlled object. In a case where the calculated difference is equal to or less than the predetermined threshold value, it may be estimated that a state of the controlled object predicted by using the prediction model is not deviated from an actual state of the controlled object. The state estimator 206 executes simulation for estimating a state of the controlled object on the basis of a difference between the first feature information the second feature information, but is not limited thereto. For example, the state estimator 206 may estimate a state of a controlled object by using any simulation as long as the simulation is designated in advance. The state estimator 206 transmits an estimated result to the control apparatus 400. The state estimator 206 is one aspect of an estimator. The estimator estimates a state of a controlled object on the basis of sensor information and a model.

The model reviser 207 revises a model on the basis of a result of simulation and fusion sensor information. First, the model reviser 207 determines whether or not the model is required to be revised as a result of simulation. For example, in a case where a state of a controlled object predicted by the state estimator 206 is deviated from an actual state of the controlled object, the model reviser 207 may determine that the model is required to be revised. In a case where a state of the controlled object predicted by the state estimator 206 is not deviated from an actual state of the controlled object, the model reviser 207 may determine that the model is not required to be revised. In a case where it is determined that the model is required to be revised, the model reviser 207 revises the model, for example, by recording information included in the fusion sensor information in the model acquired from the model storage apparatus 300. A description will be made of a case where the model is a three-dimensional map that is represented in a three-dimensional manner. In this case, the fusion sensor information may include information that is not included in the model, such as a road being covered with earth, or a signboard being erected on the road. Such information is stored in the fusion sensor information as information such as a transmittance of an object or a reflectance of an object. In this case, the model reviser 207 revises the model by recording such information in the model. The model reviser 207 transmits the revised model to the model storage apparatus 300.

Fig. 4 is a functional block diagram illustrating a functional configuration of the model storage apparatus 300 of the first embodiment. The model storage apparatus 300 is an information processing apparatus such as a personal computer or a server. The model storage apparatus 300 stores a model used to estimate a controlled object. The model storage apparatus 300 revises the stored model on the basis of an estimated result from the estimation apparatus 200. The model storage apparatus 300 includes a CPU, a memory, an auxiliary storage device, and the like connected to each other via a bus, and functions as an apparatus including a communicator 301, a model storage 302, and a controller 303 by executing a model management program. The model management program may be recorded on a computer readable recording medium. The model management program may be transmitted via an electrical communication line.

The communicator 301 is a network interface. The communicator 301 performs communication with the estimation apparatus 200 via the network 500. The communicator 301 may perform communication according to a communication method such as a wireless LAN, a wired LAN, or LTE.

The model storage 302 is configured by using a storage device such as a magnetic hard disk device or a semiconductor storage device. The model storage 302 stores a model. The model is information representing a change related to a controlled object. The model is stored in the model storage 302 in advance. Regarding the model, any model may be stored according to a controlled object. For example, the model may be a model representing a change in an amount of ultraviolet rays from the sun, may be a model regarding a map, may be a model representing a movement route of a living thing, and may be a model representing a state of the atmosphere.

The controller 303 controls an operation of each constituent of the model storage apparatus 300. The controller 303 is executed by an apparatus including, for example, a processor such as a CPU, and a RAM. The controller 303 functions as a model reviser 304 by executing the model management program.

The model reviser 304 revises the model on the basis of a revised model received from the estimation apparatus 200. Specifically, the model reviser 304 receives the revised model from the estimation apparatus 200. The model reviser 304 records the revised model in the model storage 302.

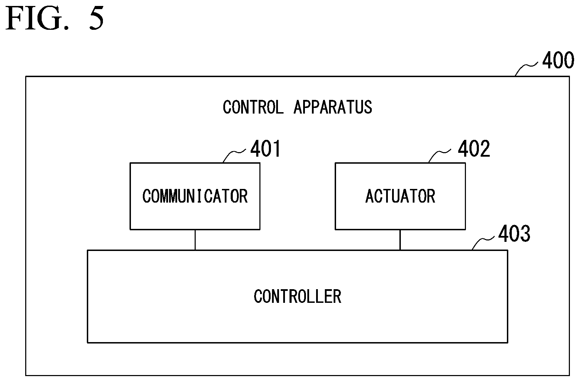

Fig. 5 is a functional block diagram illustrating a functional configuration of the control apparatus 400 of the first embodiment. The control apparatus 400 is an information processing apparatus such as a personal computer or a server. The control apparatus 400 controls a controlled object. The controlled object may be an object controlled by the control apparatus 400, and may be an environment such as a temperature, humidity, or illuminance. The control apparatus 400 includes a CPU, a memory, an auxiliary storage device, and the like connected to each other via a bus, and functions as an apparatus including a communicator 401, an actuator 402, and a controller 403 by executing a control program. The control program may be recorded on a computer readable recording medium. The control program may be transmitted via an electrical communication line.

The communicator 401 is a network interface. The communicator 401 performs communication with the estimation apparatus 200 via the network 500. The communicator 401 may perform communication according to a communication method such as a wireless LAN, a wired LAN, or LTE.

The actuator 402 is a device that is operated to control a controlled object. The actuator 402 is a machine that is driven by converting an input electrical signal into physical motion. The actuator 402 receives a control command from the controller 403. The actuator 402 is driven by executing the control command. The actuator 402 may be, for example, a device that controls movement of a moving object such as a vehicle or a robot. The actuator 402 may be a device that changes the environment, such as an electric shade, an air conditioner, or a sprayer.

The controller 403 controls an operation of each constituent of the control apparatus 400. The controller 403 is executed by an apparatus including, for example, a processor such as a CPU, and a RAM. The controller 403 controls the actuator 402 by executing the control program. Specifically, the controller 403 generates a control command on the basis of an estimated result. The control command is a command for operating a controlled object such that the controlled object acts toward a predefined control target on the basis of an estimated result. The control command differs depending on the actuator 402. In a case where the actuator 402 is a moving object such as a vehicle or a robot, the control command may be a command for designating, for example, a rotation speed of a motor or a movement direction. In this case, the control target may be a value indicating the rotation speed, and may be an azimuth indicating the movement direction. In a case where the actuator 402 is a device that changes the environment, such as an electric shade or a sprayer, the control command may be a command for designating, for example, opening or closing of the electric shade or the number of times of spraying from the sprayer. In this case, the control target may be opening or closing of the electric shade, and may be a value indicating the number of times of spraying. The controller 403 can reduce a deviation between a predicted state of a controlled object and an actual state of the controlled object by generating a control command on the basis of an estimated result.

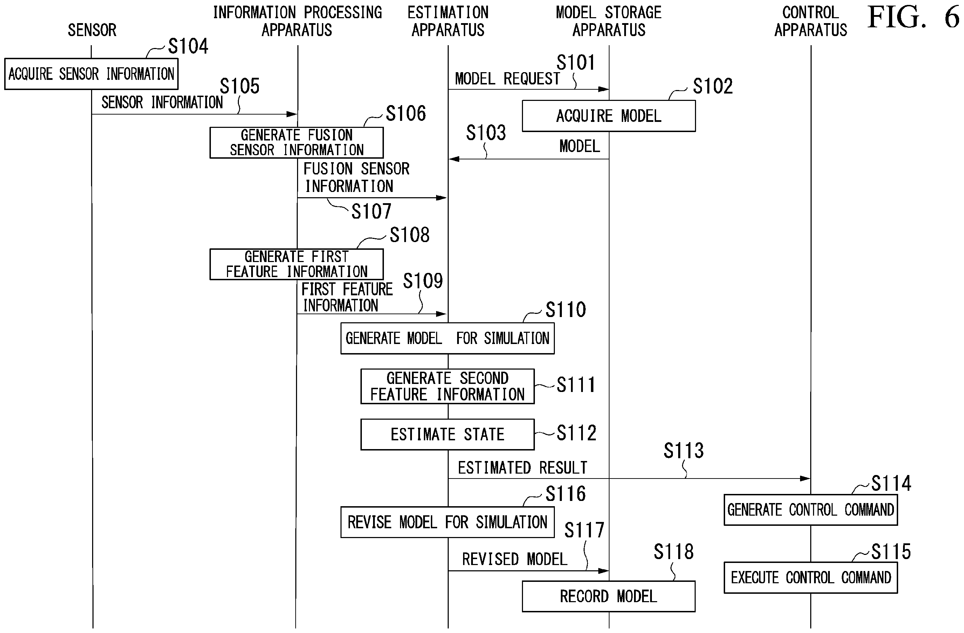

Fig. 6 is a sequence chart illustrating a flow of a process of executing control commands according to the first embodiment. The control commands are executed at a predetermined interval. The predetermined interval may be the unit of millisecond, and may be a shorter interval. The model acquirer 204 of the estimation apparatus 200 transmits a model request to the model storage apparatus 300 (step S101). The controller 303 of the model storage apparatus 300 acquires a model stored in the model storage 302 (step S102). The controller 303 transmits the model to the estimation apparatus 200 as a model response (step S103).

The plurality of sensors 10 detect an object present in the periphery of the sensors 10 and a state in the periphery of the sensors 10. The sensors 10 generate sensor information on the basis of the detected information (step S104). The plurality of sensors 10 transmit the respective pieces of generated sensor information to the information processing apparatus 100 (step S105). The fusion sensor information generator 104 executes an algorithm for combining the pieces of sensor information with each other, such as sensor fusion, and thus generates fusion sensor information from the plurality of pieces of sensor information (step S106). The fusion sensor information generator 104 transmits the fusion sensor information to the estimation apparatus 200 via the communicator 101 (step S108). The first feature information generator 105 generates first feature information on the basis of the fusion sensor information (step S108). The first feature information generator 105 transmits the generated first feature information to the estimation apparatus 200 (step S109).

The prediction model generator 205 generates a prediction model for simulation on the basis of the model and the fusion sensor information (step S110). The prediction model generator 205 records the generated prediction model in the prediction model storage 202. The state estimator 206 generates second feature information on the basis of the prediction model (step S111). The state estimator 206 estimates a state of a controlled object on the basis of the first feature information and the second feature information (step S112). The state estimator 206 transmits an estimated result to the control apparatus 400 (step S113). The controller 403 generates a control command on the basis of the estimated result (step S114). The actuator 402 is driven by executing the control command (step S115).

The model reviser 207 revises the prediction model on the basis of a result of simulation and the fusion sensor information (step S116). Specifically, the model reviser 207 determines whether or not the model is required to be revised as the result of simulation. In a case where it is determined that the model is required to be revised, the model reviser 207 revises the model by recording, for example, information included in the model acquired from the model storage apparatus 300 and the fusion sensor information, in the model acquired from the model storage apparatus 300. The model reviser 207 transmits the revised model to the model storage apparatus 300 (step S117). The model reviser 304 records the revised model received from the estimation apparatus 200 in the model storage 302 (step S118).

The estimation system 1 configured in the above-described way estimates a state of a controlled object on the basis of a plurality of pieces of sensor information and a model regarding the controlled object. The controlled object is operated on the basis of an estimated result. The estimation system 1 can control the controlled object according to a change in the controlled object by using the model regarding the controlled object. Thus, it is possible to control the controlled object with higher accuracy than operating the controlled object by using only sensor information.

### (Second Embodiment)

Next, a description will be made of an estimation system 2 of a second embodiment. Position information representing a position of a moving object is necessary to automatically drive the moving object such as a vehicle or a robot. The moving object acquires position information thereof by using a global positioning system (GPS) or the like. However, the position information acquired by the GPS may include an error in the units of several meters to several tens of meters. In the moving object, using the position information including such an error for automated driving reduces the accuracy of the automated driving and thus is not preferable. Thus, it is necessary to estimate a position of a moving object with higher accuracy. The estimation system 2 of the second embodiment is a technique for estimating a position of a moving object with higher accuracy.

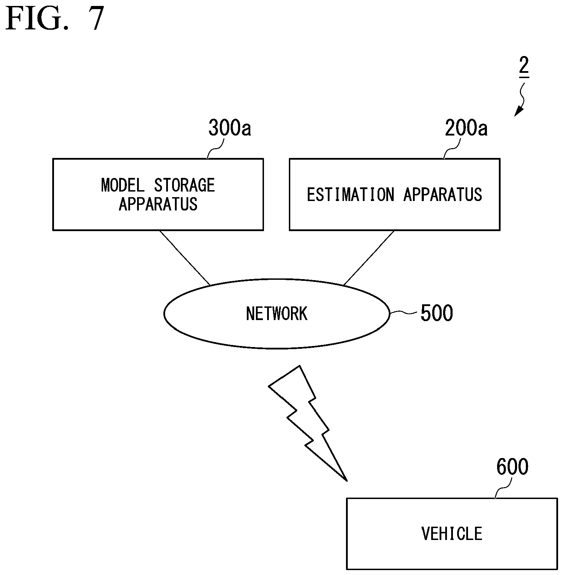

Fig. 7 is a functional block diagram illustrating a functional configuration of the estimation system 2 of the second embodiment. The estimation system 2 according to the second embodiment is different from that of the first embodiment in that the information processing apparatus 100 and the control apparatus 400 are not provided, an estimation apparatus 200a is provided instead of the estimation apparatus 200, a model storage apparatus 300a is provided instead of the model storage apparatus 300, and a vehicle 600 is further provided, and the remaining constituents are the same as those of the first embodiment. Hereinafter, a description will be made of differences from the first embodiment. In the estimation system 2, a position of the vehicle 600 is estimated by using sensors 10a provided in the vehicle 600. The estimation apparatus 200a, the model storage apparatus 300a, and the vehicle 600 can perform communication via a network 500.

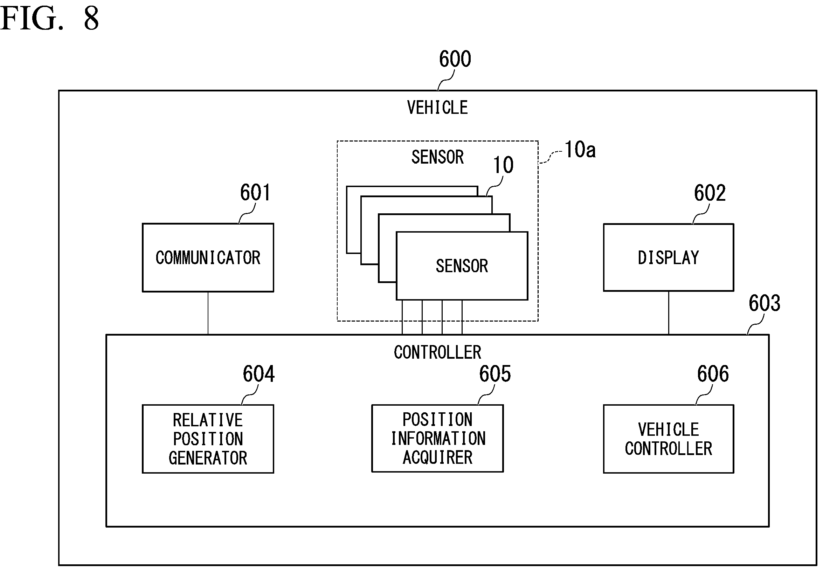

Fig. 8 is a functional block diagram illustrating a functional configuration of the vehicle 600 of the second embodiment. The vehicle 600 is a moving object such as an automobile, a motorcycle, or a train. The vehicle 600 detects an object or information regarding an environment in the periphery of the vehicle 600 on the basis of the plurality of provided sensors 10a.

The vehicle 600 transmits the detected sensor information to the estimation apparatus 200a. The vehicle 600 transmits position information representing a position of the vehicle 600 to the estimation apparatus 200. The vehicle 600 receives information representing a more accurate position of the vehicle 600 estimated by the estimation apparatus 200a. The vehicle 600 includes a CPU, a memory, an auxiliary storage device, and the like connected to each other via a bus, and functions as an apparatus including a communicator 601, the sensors 10a, a display 602, and a controller 603 by executing a position estimation program. The position estimation program may be recorded on a computer readable recording medium. The computer readable recording medium is, for example, a portable medium such as a flexible disk, a magnetooptical disc, a ROM, or a CD-ROM, or a storage device such as a hard disk built into a computer system. The position estimation program may be transmitted via an electrical communication line. The vehicle 600 is one aspect of a moving object.

The communicator 601 is a network interface. The communicator 601 performs communication with the estimation apparatus 200a via the network 500. The communicator 601 may perform communication according to a wireless communication method such as a wireless LAN or LTE.

The sensors 10a are configured with a plurality of sensors 10. The sensor 10 is the same as the sensor 10 of the first embodiment, and thus a description thereof will not be repeated. The sensors 10a output generated sensor information to a relative position generator 604. The sensor information is one aspect of distance information. The distance information is information representing a distance between an object present in the periphery of a moving object and the moving object.

The display 602 is an output device such as a cathode ray tube (CRT) display, a liquid crystal display, or an organic electroluminescence (EL) display. The display 602 may be an interface for connecting the output device to the vehicle 600. In this case, the display 602 generates video signals from video data, and outputs the video signals to a video output device connected thereto.

The controller 603 controls an operation of each constituent of the vehicle 600. The controller 603 is executed by an apparatus including, for example, a processor such as a CPU, and a RAM. The controller 603 functions as the relative position generator 604, a position information acquirer 605, and a vehicle controller 606 by executing the position estimation program.

The relative position generator 604 generates relative position information on the basis of sensor information acquired from the sensors 10a. The relative position information is information representing a relative position of an object detected with a position of the vehicle 600 (for example, a location where the sensor 10a is provided) as a reference position. The relative position information indicates an observation result in the periphery of the vehicle 600, observed by the sensor 10a. The relative position information is represented by three-dimensional coordinates such as a point cloud. A reference position in the relative position information may be the origin of the three-dimensional coordinates. An object in the relative position information is represented by, for example, three-dimensional point group data. The color of an object in the relative position information is determined on the basis of a transmittance or a reflectance of the object included in detection information. In the relative position information, values included in detection information are respectively stored in coordinates. The relative position generator 604 may identify what an object is on the basis of information included in the detection information such as the transmittance or the reflectance. In this case, the relative position generator 604 may store attribute information representing the name of the identified object in each value of three-dimensional coordinates. The attribute information may be information regarding any object as long as the object such as a building, a concrete object, a metallic object, a living thing, a road, or a plant can be detected by a sensor. The relative position generator 604 correlates the sensor information with the relative position information, and transmits a correlated result to the estimation apparatus 200.

The position information acquirer 605 acquires position information representing a position of the vehicle 600. For example, the position information acquirer 605 is a global positioning system (GPS) receiver, and acquires position information of the vehicle 600 from GPS satellites. The position information may be represented by a geographic coordinate system such as latitude and longitude information. The position information may be, for example, latitude and longitude information acquired from GPS satellites. The position information may include information such as altitude, a speed, and the date and time, in addition to the latitude and longitude information. The position information may be corrected by using at least one of speed information and acceleration information of the vehicle 600 in a mountainous area or a tunnel where it is difficult for radio waves from GPS satellites to reach. The position information may include an error of several meters to several tens of meters. For example, the position information acquirer 605 is a beacon receiver, and may acquire a beacon signal from a beacon transmitter. The beacon signal includes position information representing a position where a beacon is provided. The position information included in the beacon signal may indicate the position where the beacon transmitter is provided with a geographic coordinate system such as latitude and longitude information, and may be separate latitude and longitude information stored in advance in the beacon transmitter. The position information acquirer 605 transmits the acquired position information to the estimation apparatus 200a.

The vehicle controller 606 controls movement of the vehicle 600. Specifically, the vehicle controller 606 acquires estimated position information from the estimation apparatus 200a. The vehicle controller 606 may move the vehicle 600 such that the vehicle does not come into contact with an object detected by the sensor 10a with, for example, a position represented by the estimated position information as a reference. The contact indicates that, for example, a distance between the vehicle 600 and a detected object is shorter than a predetermined distance. The predetermined distance is a distance such as 5 meters or 10 meters, at which the vehicle 600 is included within a predetermined distance centering on the sensor 10a. The vehicle controller 606 may replace, for example, position information acquired by the position information acquirer 605 with position information represented by the estimated position information. In this case, the vehicle controller 606 may reset, for example, a route to a destination that is input to a car navigation apparatus according to the position information represented by the estimated position information. The estimated position information will be described later.

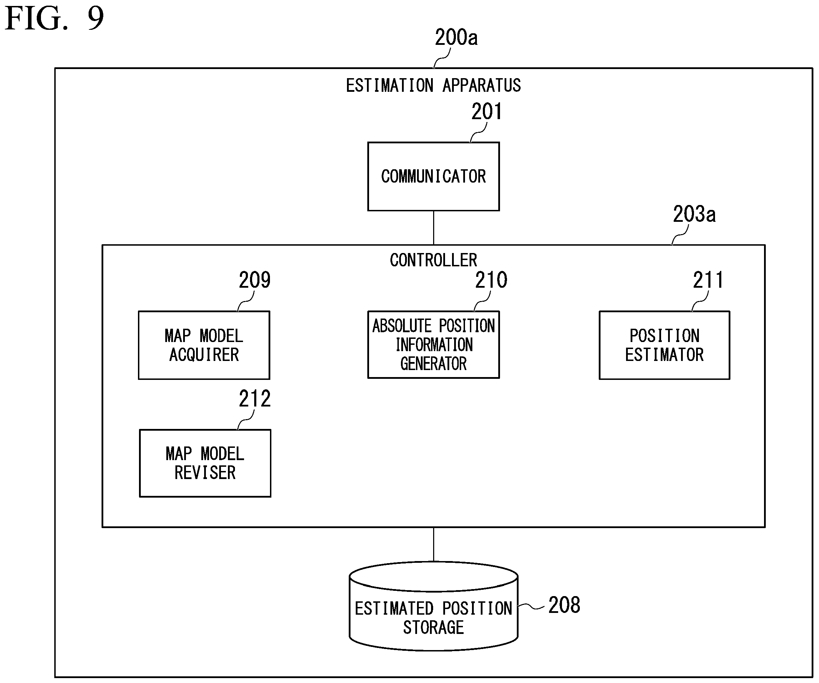

Fig. 9 is a functional block diagram illustrating a functional configuration of the estimation apparatus 200a of the second embodiment.

The estimation apparatus 200a of the second embodiment is different from that of the first embodiment in that the prediction model storage 202 is not provided, a controller 203a is provided instead of the controller 203, and an estimated position storage 208 is further provided, and the remaining constituents are the same as those of the first embodiment. Hereinafter, a description will be made of differences from the first embodiment. The estimation apparatus 200a estimates a position of the vehicle 600 on the basis of sensor information, relative position information, and position information acquired from the vehicle 600, and a map model stored in the model storage apparatus 300a. The estimation apparatus 200a includes a CPU, a memory, an auxiliary storage device, and the like connected to each other via a bus, and functions as an apparatus including a communicator 201, the estimated position storage 208, and the controller 203a by executing a position estimation program. The position estimation program may be recorded on a computer readable recording medium. The position estimation program may be transmitted via an electrical communication line.

The estimated position storage 208 is configured by using a storage device such as a magnetic hard disk device or a semiconductor storage device. The estimated position storage 208 stores estimated position information of the vehicle 600. The estimated position information is information representing a position of the vehicle 600 estimated by a position estimator 211.

The estimated position information is information obtained by estimating a position of the vehicle 600 on the basis of sensor information, relative position information, and position information. The estimated position information may be represented by a geographic coordinate system such as latitude and longitude information. The estimated position storage 208 stores the estimated position information in correlation with a time point.

The controller 203a controls an operation of each constituent of the estimation apparatus 200a. The controller 203a is executed by an apparatus including, for example, a processor such as a CPU, and a RAM. The controller 203a functions as a map model acquirer 209, an absolute position information generator 210, the position estimator 211, and a map model reviser 212 by executing the position estimation program.

The map model acquirer 209 transmits a map model request to the model storage apparatus 300a. The map model request is a process of requesting transmission of a map model stored in the model storage apparatus 300a. The absolute position information generator 210 generates absolute position information by performing predetermined simulation on the basis of the position information and the map model. The absolute position information is information in which an object that is observable from a reference position is represented by three-dimensional point group data. The absolute position information is represented by three-dimensional coordinates such as a point cloud. The reference position in the absolute position information is a position represented by position information acquired from the vehicle 600 among positions on the map model. An object in the absolute position information is represented by, for example, three-dimensional point group data. An object in the absolute position information may be an object represented by three-dimensional point group data on the map model, and may use three-dimensional point group data obtained by simulating detection information.

The absolute position information stores a value obtained by performing predetermined simulation on the map model and the detection information for each coordinate of the three-dimensional coordinates. A value stored in each coordinate may be a value included in detection information such as a transmittance of an object or a reflectance of the object. The predetermined simulation may be performed by using well-known simulation means such as a millimeter wave radar simulator or a LIDAR simulator. The predetermined simulation may be, for example, a process of reflecting information regarding an environment such as a temperature, illuminance, humidity, or dust included in the detection information on the map model.

The position estimator 211 estimates a position of the vehicle 600 on the basis of the relative position information and the absolute position information. The position estimator 211 generates estimated position information on the basis of an estimated result. The position estimator 211 transmits the generated estimated position information to the vehicle 600. The position estimator 211 records the generated estimated position information in the estimated position storage 208. The position estimator 211 estimates a position of the vehicle 600, for example, according to one of two methods described below. The position estimator 211 is one aspect of an estimator.

### (First method)

The position estimator 211 generates candidate position information by performing a predetermined process on the absolute position information. The candidate position information is information in which a candidate position where the vehicle 600 is estimated to be present is set to a reference position. The reference position in the candidate position information is a position represented by performing the predetermined process on a reference position in absolute position information. The predetermined process will be described later. The candidate position information is position information obtained by changing an angle or changing a reference position with respect to the absolute position information. In other words, the candidate position information is information in which an object that is observable from a reference position is represented by three-dimensional point group data. The candidate position information is represented by three-dimensional coordinates such as a point cloud. A value stored in each coordinate of the candidate position information is the same as a value stored in each coordinate of the absolute position information, such as each value included in detection information such as the transmittance of an object or the reflectance of the object.

The predetermined process is, for example, a change of coordinates related to rotation (hereinafter, referred to as a "rotation process").

The rotation process is a process in which three-dimensional coordinates of the absolute position information are rotated in any direction on the basis of a reference position where the vehicle 600 is estimated to be present. The position estimator 211 corrects deviation in the accuracy between the absolute position information and the relative position information by performing the rotation process. The predetermined process is, for example, a coordinate change related to translation (hereinafter, referred to as a "translation process"). The translation process is a process in which a reference position in the absolute position information is moved in any direction on three-dimensional coordinates on the basis of a reference position at which the vehicle 600 is estimated to be present. The position estimator 211 sets three-dimensional coordinates after movement as a new reference position in the absolute position information. The position estimator 211 corrects deviation in coordinates between a reference position in the absolute position information and a reference position in the relative position information by performing the translation process. The position estimator 211 generates the candidate position information by performing the rotation process or the translation process on a map model.

The position estimator 211 acquires the sensor information and the relative position information from the vehicle 600. The position estimator 211 determines whether or not the relative position information and the candidate position information satisfy a predetermined condition. The predetermined condition may be, for example, whether or not the coincidence between the relative position information and the candidate position information is equal to or more than a predefined threshold value. The coincidence may be an index representing to what extent each value stored in a three-dimensional coordinate represented by the relative position information coincides with each value stored in a three-dimensional coordinate represented by the candidate position information. The coincidence may be defined according to, for example, a difference between each value stored in a three-dimensional coordinate in the relative position information and each value stored in a three-dimensional coordinate in the candidate position information. The position estimator 211 calculates, for example, a difference between a value stored in a three-dimensional coordinate in the relative position information and a value in the absolute position information stored in the same three-dimensional coordinate as the three-dimensional coordinate in the relative position information. The position estimator 211 may calculate a difference for each three-dimensional coordinate and calculate the coincidence on the basis of statistical information of the calculated difference. The statistical information may be, for example, an average value, may be the minimum value, may be the maximum value, and may be the most frequent value. In a case where the predetermined condition is satisfied, the position estimator 211 estimates the reference position in the candidate position information to be a position of the vehicle 600. The position estimator 211 generates the estimated position information on the basis of the estimated position. In a case where the predetermined condition is not satisfied, the position estimator 211 changes contents of the rotation process and the translation process, and generates another piece of candidate position information.

The position estimator 211 may be configured to generate a plurality of pieces of candidate position information in advance. In this case, the position estimator 211 may estimate a reference position in the candidate position information of which the coincidence with relative position information is highest to be a position of the vehicle 600 among the plurality of pieces of candidate position information.

### (Second method)

The position estimator 211 acquires the sensor information and the relative position information from the vehicle 600. The position estimator 211 calculates a difference between a value stored in a three-dimensional coordinate in the relative position information and a value stored in a three-dimensional coordinate in the absolute position information. The difference includes a value representing an object not represented in the absolute position information, such as a person, a fallen object, or a vehicle. In a case where there is a difference between the position of the vehicle 600 and the reference position in the absolute position information, the difference includes an object or the like represented in the absolute position information, such as a building, a road, or a plant.

The position estimator 211 generates one or more pieces of correction information on the basis of the calculated difference. The correction information is information for correcting a difference between the position information acquired from the vehicle 600 and a position where the vehicle 600 is actually present. The correction information may be represented by a geographic coordinate system such as latitude and longitude information, and may be information representing to what extent the position estimator 211 performs the rotation process or the translation process on the absolute position information. The position estimator 211 may generate the correction information by using a well-known method. For example, the position estimator 211 may generate the correction information by using machine learning on the basis of a difference between past position information acquired from the vehicle 600 and the calculated difference. When the correction information is generated, the position estimator 211 may generate one or more pieces of correction information by using different methods, respectively.

The position estimator 211 generates the candidate position information by correcting the absolute position information on the basis of the generated correction information. Specifically, in a case where the correction information is represented by a geographic coordinate system such as latitude and longitude information, the position estimator 211 sets a reference position in the absolute position information corrected by using the correction information as a reference position in the candidate position information. The reference position in the candidate position information is a position where the vehicle 600 is estimated to be present. In a case where the correction information indicates to which extent the rotation process or the translation process is performed on the position information, the position estimator 211 sets a position obtained by performing the rotation process and the translation process on the reference position in the absolute position information as the reference position in the candidate position information. The position estimator 211 generates the estimated position information on the basis of the reference position in the candidate position information. In a case where a plurality of pieces of correction information are generated, the position estimator 211 may generate a plurality of pieces of candidate position information. In this case, the position estimator 211 estimates a reference position in the candidate position information of which the coincidence with relative position information is highest to be a position of the vehicle 600 among the plurality of pieces of candidate position information. The position estimator 211 generates the estimated position information on the basis of the estimated position. The candidate position information in the second method is one aspect of corrected position information. The corrected position information is information obtained by correcting a position represented by position information on the basis of a difference between a position of an object in a map model in which a reference position is set as the position information, and a position of the object in the relative position information.

The map model reviser 212 revises the map model on the basis of the estimated position information and the sensor information. Specifically, the map model reviser 212 determines whether or not the map model is required to be revised. For example, in a case where the estimated position information that is estimated by the position estimator 211 is deviated from the position information, the map model reviser 212 may determine that the map model is required to be revised.

In a case where the estimated position information that is estimated by the position estimator 211 is not deviated from the position information, the map model reviser 212 may determine that the map model is not required to be revised.

In a case where it is determined that the map model is required to be revised, the map model reviser 212 revises the map model, for example, by recording information included in the sensor information in the map model acquired from the model storage apparatus 300a. For example, the sensor information may include information that is not included in the model, such as a road being covered with earth, or a signboard being erected on the road. In this case, the map model reviser 212 revises the map model by recording such information in each coordinate value of the map model. The map model reviser 212 transmits the revised map model to the model storage apparatus 300a.

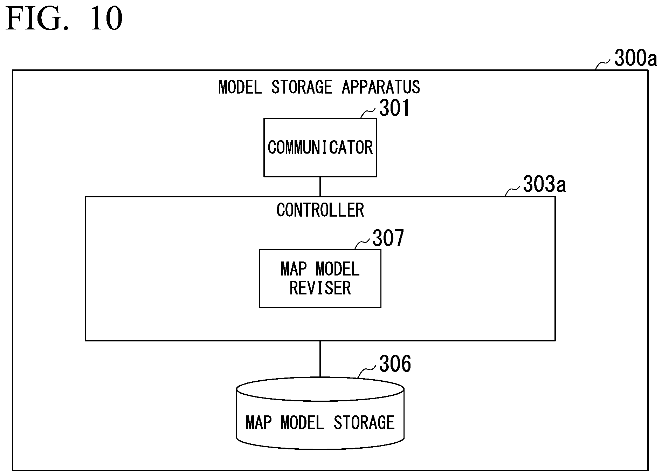

Fig. 10 is a functional block diagram illustrating a functional configuration of the model storage apparatus 300a of the second embodiment. The model storage apparatus 300a of the second embodiment is different from that of the first embodiment in that the model storage 302 is not provided, a controller 303a is provided instead of the controller 303, and a map model storage 306 is further provided, and the remaining constituents are the same as those of the first embodiment. Hereinafter, a description will be provided of differences from the first embodiment.

The map model storage 306 is configured by using a storage device such as a magnetic hard disk device or a semiconductor storage device. The map model storage 306 stores a map model. The map model represents a map of a location to which the vehicle 600 is moved. The map model is information in which an object provided on a geographical region is expressed on three-dimensional coordinates such as a 3D map. The map model represents a position of an object provided on the geographical region. The position of the object may be represented by a geographic coordinate system such as latitude and longitude information. The object provided on a geographical region may be an artificial object such as a building or a road. The object provided on a geographical region may be a natural object such as a plant, a road, a mountain, a river, or a sea. The map model may be stored in the map model storage 306 in advance, and may be acquired from an external apparatus via a communicator 301. The map model may be updated in a predetermined cycle. The predetermined cycle may be, for example, one week, and may be one month.

The controller 303a controls an operation of each constituent of the model storage apparatus 300a. The controller 303a is executed by an apparatus including, for example, a processor such as a CPU, and a RAM. The controller 303a functions as a map model reviser 307 by executing a map model management program.

The map model reviser 307 revises the map model on the basis of a revised map model received from the estimation apparatus 200a. Specifically, the map model reviser 307 receives the revised map model from the estimation apparatus 200a. The map model reviser 307 records the revised map model in the map model storage 306.

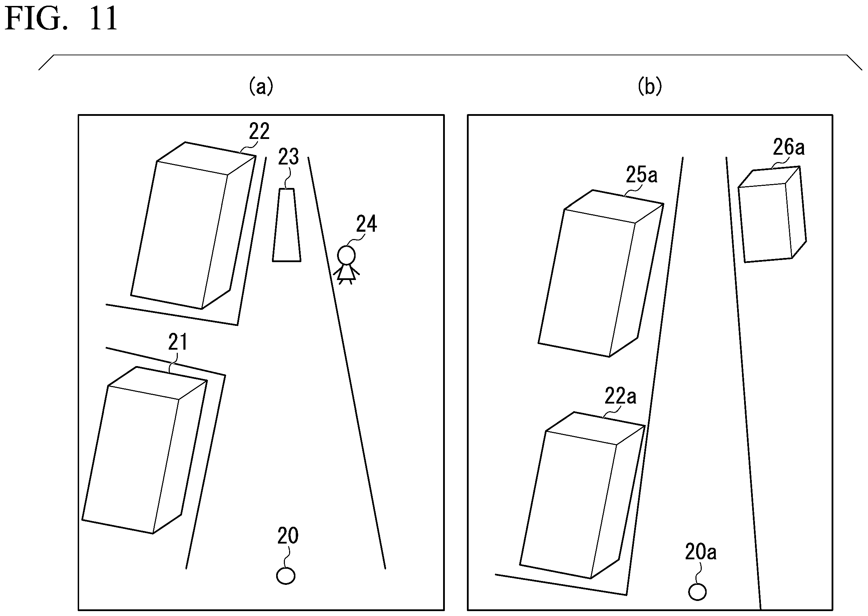

Fig. 11 is a diagram illustrating one specific example of each of relative position information and absolute position information according to the second embodiment. Fig. 11(a) illustrates one specific example of relative position information generated by the relative position generator 604. Fig. 11(a) includes a reference position 20, a building 21, a building 22, an automobile 23, and a pedestrian 24. The reference position 20 represents a position of the vehicle 600. The building 21, the building 22, the automobile 23, and the pedestrian 24 are objects detected by the plurality of sensors 10a included in the vehicle 600.

Fig. 11(b) illustrates one specific example of absolute position information. Fig. 11(b) illustrates absolute position information generated on the basis of position information correlated with sensor information used to generate the relative position information in Fig. 11(a). Fig. 11(b) includes a reference position 20a, a building 22a, a building 25a, and a building 26a. The reference position 20a represents a position in absolute position information corresponding to position information acquired from the vehicle 600. The building 22a, the building 25a, and the building 26a are objects provided in the absolute position information. The building 22a, the building 25a, and the building 26a are objects that are observable from the reference position. The building 22 and the building 22a represent the same object. Fig. 11(b) does not include the automobile 23 and the pedestrian 24. This is because the automobile 23 and the pedestrian 24 are not included in a map model used to generate absolute position information. The reference position 20 in Fig. 11(a) is different from the reference position 20a in Fig. 11(b). The position estimator 211 generates estimated position information by performing the above-described process with respect to Fig. 11(a) and Fig. 11(b). For example, the position estimator 211 corrects a deviation from the relative position information in Fig. 11(a) by performing a translation process on the absolute position information in Fig. 11(b), so that the coincidence between the absolute position information and the relative position information is increased.

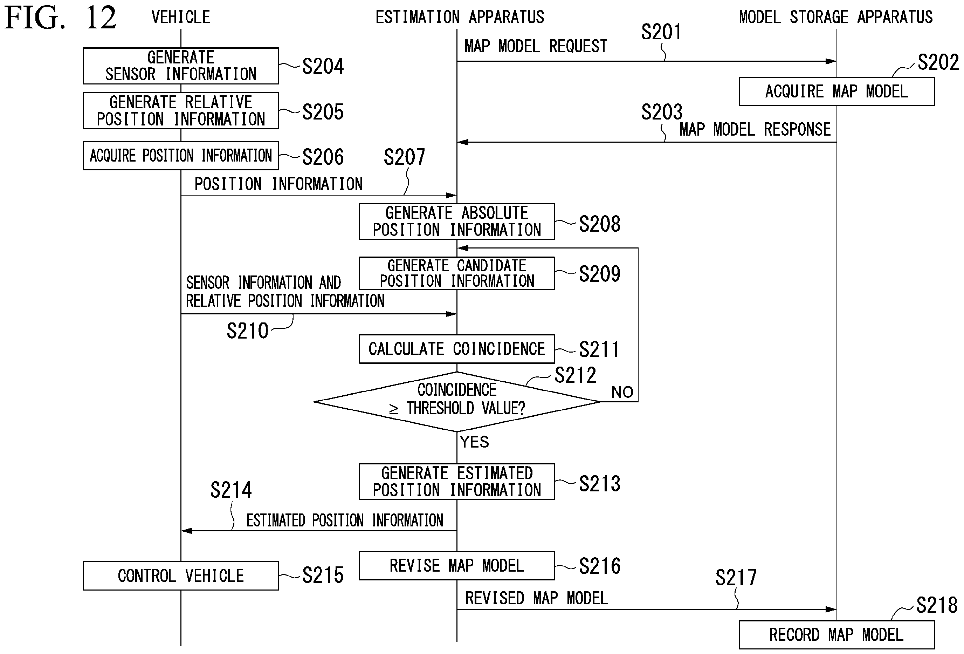

Fig. 12 is a sequence chart illustrating a flow of a first method of estimating a position of the vehicle 600 of the second embodiment. The first method is executed at a predetermined interval while the vehicle 600 is traveling. The predetermined interval may be the unit of millisecond, and may be a shorter interval. The map model acquirer 209 of the estimation apparatus 200a transmits a map model request to the model storage apparatus 300a (step S201). The controller 303a of the model storage apparatus 300a acquires a map model stored in the map model storage 306 (step S202). The controller 303a transmits the map model to the estimation apparatus 200a as a map model response (step S203).

The sensors 10a of the vehicle 600 detect an object present in the periphery of the sensors 10a and a state in the periphery of the sensors 10a. The sensors 10a generate sensor information on the basis of the detected information (step S204). The relative position generator 604 generates relative position information on the basis of the sensor information (step S205). The position information acquirer 605 acquires position information of the vehicle 600 (step S206). The position information acquirer 605 transmits the acquired position information to the estimation apparatus 200a (step S207).

The absolute position information generator 210 generates absolute position information by performing predetermined simulation on the basis of the position information and the map model (step S208).

The position estimator 211 generates candidate position information by performing a predetermined process on the absolute position information (step S209). The predetermined process is, for example, a rotation process or a translation process. The position estimator 211 acquires the sensor information and the relative position information from the vehicle 600 (step S210). The position estimator 211 calculates the coincidence between the relative position information and the absolute position information (step S211). The position estimator 211 determines whether or not the coincidence is equal to or more than a predefined threshold value (step S212). In a case where the coincidence is not equal to or more than the predefined threshold value (step S212: NO), the process proceeds to step S209. In a case where the coincidence is equal to or more than the predefined threshold value (step S212: YES), the position estimator 211 estimates a reference position in the candidate position information to be a position of the vehicle 600. The position estimator 211 generates estimated position information on the basis of the estimated portion (step S213).

The position estimator 211 transmits the estimated position information to the vehicle 600 (step S214). The position estimator 21 1 records the generated estimated position information in the estimated position storage 208. The vehicle controller 606 controls the vehicle 600 on the basis of the estimated position information (step S215). The map model reviser 212 revises the map model on the basis of the estimated position information and the sensor information (step S216). The map model reviser 212 transmits the revised map model to the model storage apparatus 300a (step S217). The map model reviser 307 records the revised map model received from the estimation apparatus 200a in the map model storage 306 (step S218).

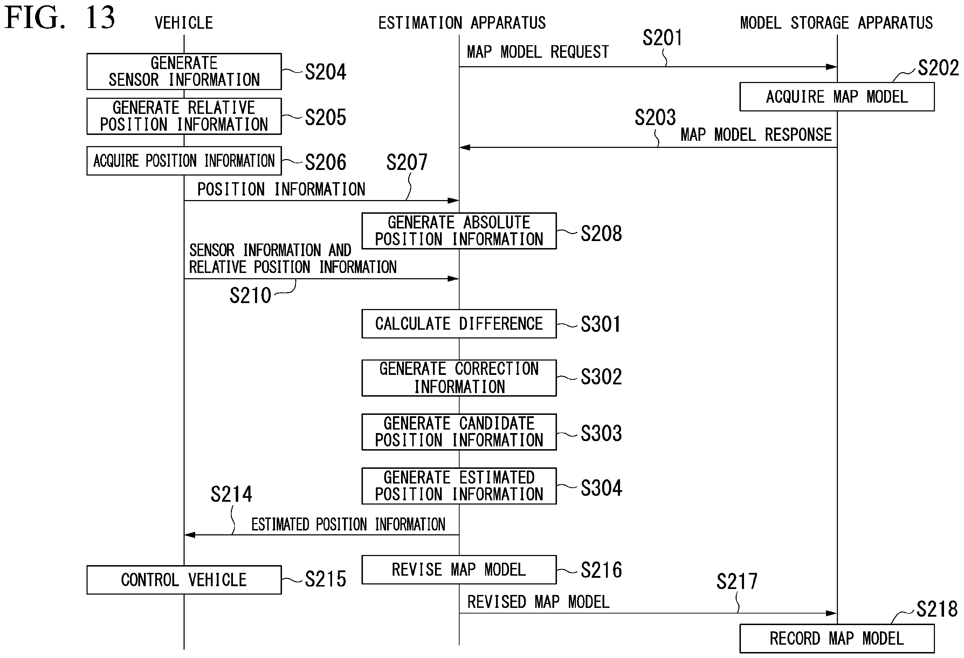

Fig. 13 is a sequence chart illustrating a flow of a second method of estimating a position of the vehicle 600 of the second embodiment. The second method is executed at a predetermined interval while the vehicle 600 is traveling. The predetermined interval may be the unit of millisecond, and may be a shorter interval. In Fig. 13, step S201 to step S210 and step S214 to step S218 are the same as those in Fig. 12, and thus a description thereof will not be repeated.

The position estimator 211 calculates a difference between a value stored in a three-dimensional coordinate in the relative position information and a value stored in a three-dimensional coordinate in the absolute position information (step S301). The position estimator 211 generates one or more pieces of correction information on the basis of the calculated difference (step S302). When the correction information is generated, the position estimator 211 may generate one or more pieces of correction information by using different methods, respectively. The position estimator 211 generates the candidate position information by correcting the absolute position information on the basis of the generated correction information (step S303). The position estimator 211 generates estimated position information on the basis of the reference position in the candidate position information (step S304).

The estimation system 2 configured in the above-described way can estimate a position of the vehicle 600 with higher accuracy. Specifically, the relative position generator 604 of the vehicle 600 generates relative position information representing a relative position between the vehicle 600 and an object on the basis of sensor information that is detected according to a position of the object present in the periphery of the vehicle 600. Next, the position estimator 211 of the estimation apparatus 200a estimates, as a position of the vehicle 600, a position satisfying a condition related to the coincidence between a position of the object represented by a map model and a position of the object represented by relative position information on the basis of the map model representing the position of the object present in a region where the vehicle 600 is located and the relative position information. Consequently, it is possible to estimate a position of the vehicle 600 on the basis of an object in the periphery of the vehicle 600. Therefore, the estimation system 2 can estimate a position of the vehicle 600 with higher accuracy. By using a millimeter wave radar or LIDAR as a sensor, the vehicle 600 can estimate a position with accuracy equivalent to the resolution of the sensor.

The relative position generator 604 may be configured to perform a predetermined preprocess on acquired sensor information. The predetermined preprocess may be, for example, compression of sensor information, may be extraction of feature data, and may be noise filtering. The relative position generator 604 can generate relative position information with a smaller amount of information by performing such a preprocess. Therefore, even in a case where a communication line of the vehicle 600 or the estimation apparatus 200a is delayed due to congestion or the like, the vehicle 600 can transmit the relative position information to the estimation apparatus 200a at a high speed.

In the above-described embodiments, the relative position information is generated by the vehicle 600, but may be configured to be generated by the estimation apparatus 200a.

The estimation apparatus 200a may be provided by using a plurality of information processing apparatuses that are communicably connected to each other via a network. In this case, the respective functional constituents of the estimation apparatus 200a may be distributed to be provided in the plurality of information processing apparatuses. For example, the position estimator 211 and the map model reviser 212 may be provided in different information processing apparatuses.

As mentioned above, the embodiments of the present invention have been described with reference to the drawings, but a specific configuration is not limited to the embodiments, and includes design or the like within the scope without departing from the spirit of the invention.

### [Industrial Applicability]

The present invention is applicable to a service related to automated driving of a vehicle.

### [Reference Signs List]

1 Estimation system
2 Estimation system
10 Sensor
100 Information processing apparatus
101 Communicator
102 Controller
103 Sensor information acquirer
104 Fusion sensor information generator
105 First feature information generator
200 Estimation apparatus
201 Communicator
202 Prediction model storage
203 Controller
204 Model acquirer
205 Prediction model generator
206 State estimator
207 Model reviser
208 Estimated position storage
209 Map model acquirer
210 Absolute position information generator
211 Position estimator
212 Map model reviser
300 Model storage apparatus
301 Communicator
302 Model storage
303 Controller
304 Model corrector
400 Control apparatus
401 Communicator
402 Actuator
403 Controller
500 Network
600 Vehicle
601 Communicator
602 Display
603 Controller
604 Relative position generator
605 Position information acquirer
606 Vehicle controller

## Claims

1. An estimation system comprising:
an estimator estimating a state of a controlled object on the basis of a plurality of pieces of sensor information representing a state in a periphery of sensors, detected by a plurality of the sensors, and a model regarding the controlled object controlled by the estimation system; and
a controller generating a control command for operating the controlled object such that the controlled object acts toward a predefined control target, on the basis of the estimated result.

2. The estimation system according to claim 1,
wherein the controlled object is a moving object,
wherein the model is a map model representing a location to which the moving object moves,
wherein the sensor information includes distance information regarding a distance between an object present in a periphery of the moving object and the moving object,
wherein the estimation system further comprises
a relative position generator generating relative position information representing a relative position between the moving object and the object, and
a position information acquirer acquiring position information representing a position of the moving object,
wherein the estimator is configured to estimate a position of the moving object on the basis of the position information, the map model, and the relative position information, and
wherein the controller is configured to control movement of the moving object.

3. The estimation system according to claim 2,
wherein the estimator is configured to generate candidate position information representing candidates for a position of the moving object, obtained by performing a predetermined process on the position information and the map model, and estimate a position satisfying a predetermined condition related to a coincidence between the candidate position information and the relative position information to be the position of the moving object.

4. The estimation system according to claim 2,
wherein the estimator is configured to generate a plurality of pieces of corrected position information in which a position represented by the position information is corrected on the basis of a difference between a position of the object in the map model in which the position information is set to a reference position and a position of the object in the relative position information, and estimate a position represented by corrected position information having a highest coincidence with the relative position information to be the position of the moving object among the plurality of pieces of corrected position information.

5. The estimation system according to claim 1, further comprising:
a fusion sensor information generator generating fusion sensor information by performing sensor fusion on the plurality of pieces of sensor information; and
a prediction model generator generating a prediction model for estimating a state of a controlled object on the basis of the fusion sensor information and the model,
wherein the estimator is configured to estimate a state of the controlled object on the basis of the prediction model.

6. An estimation apparatus comprising:
an estimator estimating a state of a controlled object on the basis of a plurality of pieces of sensor information representing a state in a periphery of sensors, detected by a plurality of the sensors, and a model regarding the controlled object controlled by a estimation system; and
a controller generating a control command for operating the controlled object such that the controlled object acts toward a predefined control target, on the basis of the estimated result.

7. An estimation method comprising:
an estimation step of causing an estimation apparatus to estimate a state of a controlled object on the basis of a plurality of pieces of sensor information representing a state in a periphery of sensors, detected by a plurality of the sensors, and a model regarding the controlled object controlled by a estimation system; and
a control step of causing the estimation apparatus to generate a control command for operating the controlled object such that the controlled object acts toward a predefined control target, on the basis of the estimated result.

8. A computer program causing a computer to function as the estimation system according to any one of claims 1 to 5.
